# EUROPÄISCHE PATENTSCHRIFT

(11) **EP 2 569 553 B1**
(45) Veröffentlichungstag und Bekanntmachung des Hinweises auf die Patenterteilung: **02.05.2018**
(21) Anmeldenummer: 11719477.9
(22) Anmeldetag: 06.05.2011
(51) Int. Cl.: F16D 69/02

(54) **REIBBELAG ZUR DREHMOMENTÜBERTRAGUNG**
FRICTION LINING FOR TORQUE TRANSMISSION
GARNITURE DE FRICTION POUR TRANSFERT DE COUPLE

(30) Priorität: 10.05.2010 DE 102010020001
(43) Veröffentlichungstag der Anmeldung: 20.03.2013
(73) Patentinhaber: Hoerbiger Antriebstechnik Holding GmbH, 86956 Schongau (DE)
(72) Erfinder: BERGHEIM, Michael, 87672 Rosshaupten (DE); MICHEL, Jan-Marc, 97072 Würzburg (DE)
(74) Vertreter: Prinz & Partner mbB
(86) Internationale Anmeldenummer: PCT/EP2011/002271
(87) Internationale Veröffentlichungsnummer: WO 2011/141144

(56) Entgegenhaltungen:
- EP-A1- 1 396 655
- WO-A2-2009/055371
- JP-A- 2010 090 336
- US-A1- 2005 281 971

## Beschreibung

Die Erfindung betrifft einen Reibbelag zur Drehmomentübertragung. Die Erfindung betrifft ferner ein Verfahren zur Herstellung eines solchen Reibbelags.

Ein solcher Reibbelag kann insbesondere für Synchronringe von Getrieben, für Kupplungsscheiben und für Bremsscheiben verwendet werden. Allen Anwendungsfällen ist gemeinsam, dass der Reibbelag einen geringen Verschleiß und einen konstant hohen Reibwert über die gesamte Lebensdauer haben soll. Zusätzlich soll der Reibbelag insgesamt mit geringen Kosten hergestellt werden können.

Bekannt sind Reibbeläge aus einem Papier-ähnlichen Material. Dieses auch als "Reibpapier" bezeichnete Material wird aufgrund seines Herstellungsverfahrens in der Form von Bögen geliefert. Aus den Reibpapier-Bögen werden dann die einzelnen Reibbelag-Segmente ausgeschnitten und auf den Träger aufgebracht, beispielsweise aufgeklebt. Nachteilig ist dabei der unvermeidbare Verschnitt. Außerdem sind die Herstellungskosten von Reibpapier vergleichsweise hoch.

Bekannt ist auch, einen Reibbelag dadurch herzustellen, dass ein Substrat mit einem Reibmaterial beschichtet wird. Ein Beispiel zeigt die US 4,639,392. Dort wird ein Trägerpapier in mehreren Einzelschritten mit einem Reibmaterial beschichtet.

Die Aufgabe der Erfindung besteht darin, einen Reibbelag zu schaffen, der kostengünstig hergestellt werden kann und sich durch eine gute Qualität auszeichnet. Weiterhin ist es Aufgabe der Erfindung, ein Verfahren zur Herstellung eines solchen Reibbelags zu schaffen.

Zur Lösung dieser Aufgabe ist erfindungsgemäß ein Reibbelag mit den Merkmalen des Anspruchs 1 vorgesehen. Dieser Reibbelag zeichnet sich durch eine hohe Stabilität bei gleichzeitig ausreichender Nachgiebigkeit aus. Die Stabilität resultiert aus der vollständigen Durchtränkung des Substrates, die eine gute Verbindung zwischen dem Substrat und den Füllstoffen gewährleistet. Durch geeignete Auswahl der durch Bindemittel verbundenen Füllstoffe kann das Reibverhalten des Reibbelags an die jeweiligen Anforderungen angepasst werden. Mit den größeren Partikeln lässt sich die Struktur des Reibbelags in der gewünschten Weise einstellen, während sich mit den kleineren Partikeln die Reibeigenschaften in der gewünschten Weise einstellen lassen. Die gemäß Anspruch 1 vorgesehenen Werte für die Partikel der ersten und der zweiten Gruppe haben sich als vorteilhaft herausgestellt. Insbesondere lässt sich auf diese Weise gewährleisten, dass der Reibwert unter wechselnden Schmiermitteltemperaturen konstant bleibt, insbesondere bei fallenden Temperaturen des Schmiermittels der Reibwert µ1 nicht abfällt.

Vorzugsweise ist vorgesehen, dass das Substrat aus der Gruppe der folgenden Materialien gewählt ist: Aramidfilz; Polyaramide, insbesondere para- und meta-substituiert, Twaron, Dupont, Nomex; Kynol und Melaminharzfasern wie Basofil; thermoplastische Fasern; anorganische Fasern wie Glasfasern und Mineralfasern. Es ist zu erkennen, dass aufgrund des einfachen Aufbaus des Reibbelags sehr viele verschiedene Materialien als Substrat verwendet werden können.

Gemäß einer Ausführungsform der Erfindung ist vorgesehen, dass das Substrat eine offenporige, filterartige Oberflächenstruktur aufweist und insbesondere eine durchschnittliche Porengröße hat, die kleiner als 90 µm ist. Dies gewährleistet, dass die größeren der Füllstoffpartikel auf der Oberfläche des Substrates verbleiben und nicht in dieses eingebracht werden.

Vorzugsweise ist vorgesehen, dass die reibaktiven Füllstoffe aus der Gruppe der folgenden Materialien gewählt sind: Koks, Graphit, Hartstoffe, anorganische Füllstoffe wie Glimmer, Quarz, Titanate, Tonerden und Kieselgur, Festschmierstoffe, Fasern geringer Länge wie Carbon-, Glas-, Aramid-, Basaltfaser. Auch hinsichtlich der Füllstoffe ist zu sehen, dass sehr verschiedene Materialien verwendet werden können. Dies ermöglicht, unter Berücksichtigung der Anforderungen das jeweils beste geeignete Material auszuwählen.

Wenn als Füllstoff die oben genannten Fasern verwendet werden, haben diese vorzugsweise eine durchschnittliche Länge zwischen 50 und 350 µm. Dies wirkt sich vorteilhaft auf das Verschleißverhalten aus.

Das Bindemittel ist bevorzugt aus der Gruppe der folgenden Materialien gewählt: Fluorkautschuke, NBR, X-NBR und entsprechende Latices, und Harze aus den Gruppen der Phenolharze, insbesondere Resole, Novolake, der Melaminharze, der Epoxidharze, der Cyanacrylate und der Malein-/Bismaleinimid- und -amidharze.

Erfindungsgemäß ist auch ein Verfahren zur Herstellung eines Reibbelags mit den Merkmalen des Anspruchs 7 vorgesehen. Dieses Verfahren beruht auf der Erkenntnis, dass es möglich ist, in einem einzigen Schritt das Bindemittel mit allen Füllstoffen auf das Substrat, das eine offenporige, filterartige Oberflächenstruktur hat, aufzutragen, ohne dass hinsichtlich der Qualität des Reibbelags Abstriche gemacht werden müssen. Aufgrund der geringen Anzahl an Verfahrensschritten ist das Verfahren dabei besonders kostengünstig.

Gemäß einer bevorzugten Ausführungsform ist vorgesehen, dass die Mischung aufgerakelt wird. Diese Vorgehensweise ist technisch einfach zu beherrschen; die Mischung aus Bindemittel und Füllstoffen wird kontinuierlich auf das Substrat aufgebracht und mittels einer Rakel auf die gewünschte Dicke gebracht. Auf diese Weise können enge Toleranzen hinsichtlich der Dicke der auf das Substrat aufgebrachten Schicht eingehalten werden.

Alternativ ist vorgesehen, dass die Mischung allein mittels einer Düse aufgebracht wird. Auch diese ermöglicht es in technisch einfacher Weise, die Mischung aus Bindemittel und Füllstoffen kontinuierlich und mit hoher Verteilungsgenauigkeit auf das Substrat aufzubringen.

Gemäß einer Ausführungsform ist vorgesehen, dass das Bindemittel nach dem Aufbringen der Mischung auf das Substrat zunächst in einen B-Zustand gebracht wird. Dies gewährleistet, dass die auf das Substrat aufgebrachte Mischung die nötige Festigkeit hat, bevor sie weiterverarbeitet wird.

Vorzugsweise wird das beschichtete Substrat durch Heißpressen mit einem für die Anwendung vorgesehenen Träger verbunden. Hierbei wird das verwendete Bindemittel in den C-Zustand überführt. Durch das Heißpressen kann außerdem die Dicke des beschichteten Substrates nachkalibriert werden.

Die Erfindung wird nachfolgend anhand einiger Ausführungsbeispiele beschrieben, die in den beigefügten Zeichnungen dargestellt sind. In diesen zeigen:
- Figur 1 schematisch das Aufbringen einer Mischung aus Bindemittel und Füllstoffen auf ein Substrat mittels einer Rakel;
- Figur 2 in vergrößertem Maßstab den Ausschnitt II von Figur 1;
- Figur 3 in einer perspektivischen Ansicht das Aufbringen einer Mischung aus Bindemittel und Füllstoffen auf ein Substrat mittels einer Schlitzdüse, die alternativ für das Aufbringen der Mischung auf das Substrat verwendet werden kann.

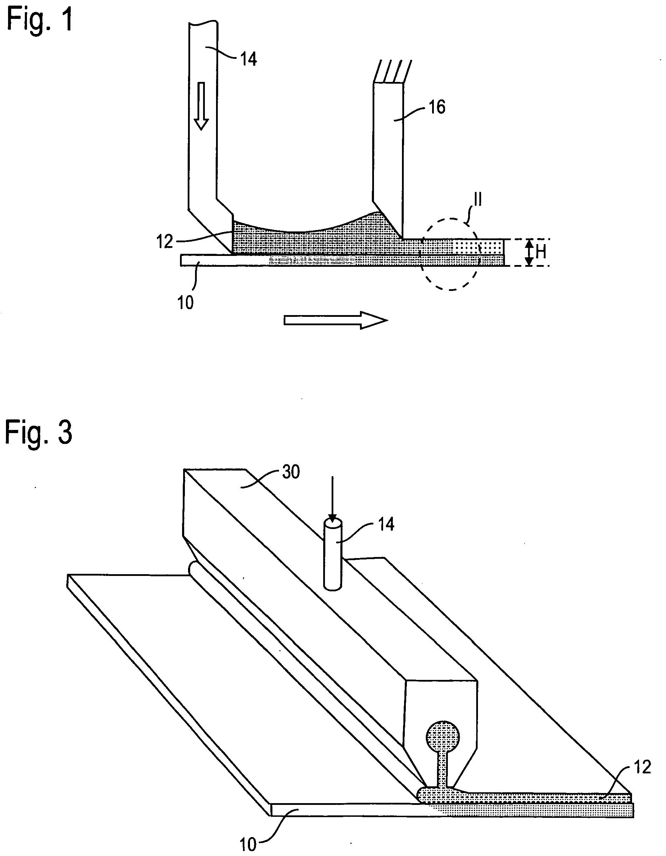

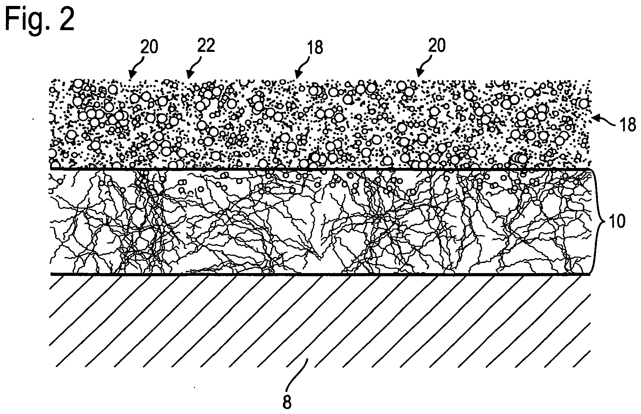

In Figur 1 ist ein Substrat 10 zu sehen, bei dem es sich um eine Bahn aus Aramidfilz handeln kann. Dieses wird mit einer Mischung 12 aus Füllstoffen, beispielsweise Kokspartikeln, und einem Bindemittel 22, beispielsweise einem einstufigen Resolharz, beschichtet. Zu diesem Zweck wird das Substrat relativ zu einer Dosiervorrichtung 14 bewegt (beispielsweise auf einer in Figur 2 gezeigten Unterlage 8), welche die Mischung 12 kontinuierlich auf die Oberfläche des Substrates 10 aufbringt. Im Abstand von der Dosiervorrichtung 14 ist eine Rakel 16 in einer vorbestimmten Höhe über dem Substrat 10 angeordnet, so dass die Mischung 12 (und damit das Substrat mit der darauf aufgebrachten Mischung) stromabwärts der Rakel 16 eine vorbestimmte Dicke hat.

Die Füllstoffe bestehen bei diesem Ausführungsbeispiel aus Kokspartikeln, die überwiegend einer von zwei Gruppen von Partikelgrößen zugeordnet werden können: kleine Partikel 18 mit Partikelgrößen im Bereich von 2 bis 50 µm und große Partikel 20 mit Partikelgrößen im Bereich von 90 bis 800 µm. Dies ist in Figur 2 im Detail gezeigt, wobei dicke Punkte die kleinen Partikel 18 und Kreise die großen Partikel 20 symbolisieren. Das Bindemittel 22 ist in der Form von kleinen Punkten dargestellt.

Nach dem Aufbringen der Mischung aus dem Bindemittel und den Füllstoffen wird die Mischung vom Substrat "anfiltriert"; es findet eine Separation fest-flüssig statt: das Substrat wirkt wie ein Filter, der das Bindemittel aufnimmt und dabei auch einen Teil der kleinen Partikel 18 in sich "hineinsaugt". Die großen Partikel 20 bleiben, da sie größer sind als die durchschnittliche Porengröße des Substrates 10, auf der Oberfläche des Substrates "liegen". Dadurch ergibt sich ein mit dem Bindemittel durchtränktes Substrat, auf dem sich die mit dem Bindemittel benetzten Füllstoffe abgesetzt haben. Diese bilden später eine offenporige, homogene Oberfläche des Reibbelags.

Die Bewegungsgeschwindigkeit des Substrates und der Abstand zwischen der Dosiervorrichtung 14 und der Rakel 16 ist so bemessen, dass das Bindemittel 22 bei Erreichen der Rakel das Substrat 10 vollständig durchtränkt hat. Erst wenn sichergestellt ist, dass das Substrat kein weiteres Bindemittel aufsaugt, kann die Dicke des Reibbelags durch die Rakel eingestellt werden.

Wie in Figur 2 zu sehen ist, besteht der Reibbelag im Zwischenzustand stromabwärts der Rakel 16 aus einem Substrat 10, das vollständig (also bis hin zu der auf der Unterlage 8 ruhenden Seite) mit dem Bindemittel 22 getränkt ist. Von den Füllstoffen befinden sich die großen Partikel 20 und der überwiegende Teil der kleinen Partikel 18, jeweils alle mit dem Bindemittel benetzt, auf dem Substrat 10, während von den kleinen Partikeln 18 ein Teil in das Substrat 10 eingedrungen ist.

Nachdem die Dicke der Mischungsschicht auf dem Substrat eingestellt ist, wird das beschichtete Substrat getrocknet bzw. in den B-Zustand gebracht. Der Reibbelag liegt nun in der Form von großen Bahnen vor und kann weiterverarbeitet werden. Aus diesen Bahnen kann dann ein Reibbelag-Segment in der jeweils nötigen Größe ausgeschnitten und auf einen Träger aufgebracht werden, beispielsweise auf einen Synchronring oder eine Lamelle. Zur Befestigung kann der Reibbelag mittels üblicher Klebefolien versehen werden. Alternativ kann auch eine Klebstoffschicht aufgebracht werden. Die Verklebung erfolgt üblicherweise durch Heißpressen, wobei das Bindemittel vollständig aushärtet.

Alternativ zur Einstellung der Schichtdicke mittels einer Rakel kann auch eine Schlitzdüse 30 (siehe Figur 3) verwendet werden, um die Mischung 12 aus Bindemittel und Füllstoffen kontinuierlich und homogen auf das Substrat 10 aufzubringen. Die Mischung wird mittig zugeführt und verteilt sich in der Schlitzdüse gleichmäßig, so dass sie gleichmäßig über die Breite der Substratbahn aufgetragen wird. Hierzu ist es nötig, die Geometrie der Schlitzdüse 30 auf die Zusammensetzung, insbesondere die Partikelgrößen, und auf die Viskosität der Mischung abzustimmen.

Alternativ ist auch denkbar, die Mischung durch ein entsprechend ausgebildetes Sprühwerkzeug auf das Substrat aufzubringen, beispielsweise mittels eines Airless-Spritzverfahrens.

Ein großer Vorteil des beschriebenen Verfahrens besteht darin, dass die Rückseite des Substates nicht mit Füllstoffpartikeln kontaminiert wird. Dies verringert unerwünschte Änderungen der Dicke des Reibbelags.

## Patentansprüche

1. Reibbelag zur Drehmomentübertragung, mit einem Substrat (10), einem Bindemittel (22) und reibaktiven Füllstoffen (18, 20), wobei das Bindemittel (22) das Substrat (10) vollständig durchtränkt hat und sich die Füllstoffe (18, 20) auf dem Substrat (10) so ablagern, dass sich kleinere Füllstoffpartikel (18) vermehrt auf der Oberfläche des Substrates (10) befinden und zum Teil in das Substrat (10) eingedrungen sind, wobei die reibaktiven Füllstoffe (18, 20) überwiegend zwei verschiedenen Gruppen von Partikelgrößen angehören und die Füllstoffpartikel (18) der ersten Gruppe eine Partikelgröße im Bereich von 2 bis 50 µm und die Füllstoffpartikel (20) der zweiten Gruppe eine Partikelgröße im Bereich von 90 bis 800 µm haben.

2. Reibbelag nach Anspruch 1, **dadurch gekennzeichnet, dass** das Substrat (10) aus der Gruppe der folgenden Materialien gewählt ist: Aramidfilz; Polyaramide, insbesondere para- und meta-substituiert, Twaron, Dupont, Nomex; Kynol und Melaminharzfasern wie Basofil; thermoplastische Fasern; anorganische Fasern wie Glasfasern und Mineralfasern.

3. Reibbelag nach einem der vorhergehenden Ansprüche, **dadurch gekennzeichnet, dass** das Substrat (10) eine offenporige, filterartige Oberflächenstruktur hat, insbesondere mit einer durchschnittlichen Porengröße, die kleiner als 90 µm ist.

4. Reibbelag nach einem der vorhergehenden Ansprüche, **dadurch gekennzeichnet, dass** die reibaktiven Füllstoffe (18, 20) aus der Gruppe der folgenden Materialien gewählt sind: Koks, Graphit, Hartstoffe, anorganische Füllstoffe wie Glimmer, Quarz, Titanate, Tonerden und Kieselgur, Festschmierstoffe, Fasern geringer Länge wie Carbon-, Glas-, Aramid-, Basaltfaser.

5. Reibbelag nach Anspruch 4, **dadurch gekennzeichnet, dass** die Fasern eine durchschnittliche Länge zwischen 50 und 350 µm haben.

6. Reibbelag nach einem der vorhergehenden Ansprüche, **dadurch gekennzeichnet, dass** das Bindemittel (22) aus der Gruppe der folgenden Materialien gewählt ist: Fluorkautschuke, NBR, X-NBR und entsprechende Latices, und Harze aus den Gruppen der Phenolharze, insbesondere Resole, Novolake, der Melaminharze, der Epoxidharze, der Cyanacrylate und der Malein-/ Bismaleinimid- und -amidharze.

7. Verfahren zur Herstellung eines Reibbelags zur Drehmomentübertragung mit den folgenden Schritten:
- es wird ein Substrat (10) bereitgestellt, das porös ist,
- auf das Substrat (10) wird in einem einzigen Schritt eine Mischung (12) aus einem Bindemittel (22) und reibaktiven Füllstoffen (18, 20) in einer vorbestimmten Schichtdicke aufgebracht, wobei die reibaktiven Füllstoffe (18, 20) überwiegend zwei verschiedenen Gruppen von Partikelgrößen angehören und die Füllstoffpartikel (18) der ersten Gruppe eine Partikelgröße im Bereich von 2 bis 50 µm und die Füllstoffpartikel (20) der zweiten Gruppe eine Partikelgröße im Bereich von 90 bis 800 µm haben,
- das Bindemittel (22) wird ausgehärtet.

8. Verfahren nach Anspruch 7, **dadurch gekennzeichnet, dass** die Mischung (12) aufgerakelt wird.

9. Verfahren nach Anspruch 7, **dadurch gekennzeichnet, dass** die Mischung (12) mittels einer Düse (30) aufgebracht wird.

10. Verfahren nach einem der Ansprüche 7 bis 9, **dadurch gekennzeichnet, dass** das Bindemittel (22) nach dem Aufbringen der Mischung auf das Substrat (10) zunächst in einen B-Zustand gebracht wird.

11. Verfahren nach einem der Ansprüche 7 bis 10, **dadurch gekennzeichnet, dass** das beschichtete Substrat (12) durch Heißpressen mit einem anwendungsspezifischen Träger verklebt wird, wodurch das Bindemittel (22) vollständig aushärtet.

## Claims

1. A friction lining for torque transmission, comprising a substrate (10), a binder (22) and frictionally active fillers (18, 20), wherein the binder (22) has completely saturated the substrate (10), and wherein the fillers (18, 20) are deposited on the substrate (10) in such a way that smaller filler particles (18) are located to an increased degree on the surface of the substrate (10) and in part have penetrated into the substrate (10), the frictionally active fillers (18, 20) being predominantly part of two different groups of particle sizes and the filler particles (18) of the first group having a particle size in the range of from 2 to 50 µm and the filler particles (20) of the second group having a particle size in the range of from 90 to 800 µm.

2. The friction lining according to claim 1, **characterized in that** the substrate (10) is selected from the group of the following materials: aramid felt; polyaramids, in particular para- and meta-substituted, Twaron, Dupont, Nomex; Kynol and melamine resin fibers such as Basofil; thermoplastic fibers; inorganic fibers such as glass fibers and mineral fibers.

3. The friction lining according to either of the preceding claims, **characterized in that** the substrate (10) has an open-pored, filter-type surface structure, in particular having an average pore size of less than 90 µm.

4. The friction lining according to any of the preceding claims, **characterized in that** the frictionally active fillers (18, 20) are selected from the group of the following materials: coke, graphite, hard materials, inorganic fillers such as mica, quartz, titanates, aluminas and diatomaceous earth, solid lubricants, fibers of short length such as carbon fiber, glass fiber, aramid fiber, basalt fiber.

5. The friction lining according to claim 4, **characterized in that** the fibers have an average length between 50 and 350 µm.

6. The friction lining according to any of the preceding claims, **characterized in that** the binder (22) is selected from the group of the following materials: fluororubbers, NBR, X-NBR and corresponding latices, and resins from the groups of the phenolic resins, in particular resols, novolaks, of the melamine resins, epoxy resins, cyanoacrylates and of the maleinimide/bismaleinimide and maleinamide/ bismaleinamide resins.

7. A method of producing a friction lining for torque transmission, comprising the following steps:
- providing a substrate (10) which is porous;
- applying, in a single step, a mixture (12) of a binder (22) and frictionally active fillers (18, 20) to the substrate (10) in a predetermined layer thickness, the frictionally active fillers (18, 20) being predominantly part of two different groups of particle sizes and the filler particles (18) of the first group having a particle size in the range of from 2 to 50 µm and the filler particles (20) of the second group having a particle size in the range of from 90 to 800 µm;
- curing the binder (22).

8. The method according to claim 7, **characterized in that** the mixture (12) is applied with a doctor blade.

9. The method according to claim 7, **characterized in that** the mixture (12) is applied by means of a nozzle (30).

10. The method according to any of claims 7 to 9, **characterized in that** after applying the mixture to the substrate (10), the binder (22) is first brought to a B-stage.

11. The method according to any of claims 7 to 10, **characterized in that** the coated substrate (12) is adhesively bonded to an application-specific carrier by hot pressing, whereby the binder (22) is completely cured.

## Revendications

1. Garniture de friction pour la transmission d'un couple, présentant un substrat (10), un liant (22) et des matières de charge (18, 20) actives par friction, le liant (22) ayant entièrement imprégné le substrat (10), et les matières de charge (18, 20) se déposant sur le substrat (10) de telle sorte que des particules de matière de charge (18) plus petites se trouvent de manière accrue sur la surface du substrat (10) et ont partiellement pénétré dans le substrat (10), les matières de charge (18, 20) actives par friction appartenant en majeure partie à deux groupes différents de tailles de particule, et les particules de matière de charge (18) du premier groupe présentant une taille de particule dans une plage de 2 à 50 µm, et les particules de matière de charge (20) du deuxième groupe présentant une taille de particule dans une plage de 90 à 800 µm.

2. Garniture de friction selon la revendication 1, **caractérisée en ce que** le substrat (10) est choisi dans le groupe des matériaux suivants : feutre d'aramide ; polyaramides, en particulier substitués en position para et méta, Twaron, Dupont, Nomex ; Kynol et fibres de résine de mélamine telles que le Basofil ; fibres thermoplastiques ; fibres anorganiques telles que des fibres de verre et des fibres minérales.

3. Garniture de friction selon l'une des revendications précédentes, **caractérisée en ce que** le substrat (10) présente une structure de surface à pores ouverts du type filtre qui présente en particulier une grosseur de pore moyenne inférieure à 90 µm.

4. Garniture de friction selon l'une des revendications précédentes, **caractérisée en ce que** les matières de charge (18, 20) actives par friction sont choisies dans le groupes des matériaux suivants : coke, graphite, matières dures, matières de charge anorganiques telles que le mica, le quartz, les titanates, les alumines et les terres de diatomée, lubrifiants solides, fibres de faible longueur telles que les fibres de carbone, de verre, d'aramide, de basalte.

5. Garniture de friction selon la revendication 4, **caractérisée en ce que** les fibres ont une longueur moyenne comprise entre 50 et 350 µm.

6. Garniture de friction selon l'une des revendications précédentes, **caractérisée en ce que** le liant (22) est choisi dans le groupe des matériaux suivants : caoutchoucs fluorés, NBR, XNBR et latices correspondants, et résines des groupes des résines phénoliques, en particulier les résols, les novolaques, les résines de mélamine, les résines époxy, les cyanoacrylates et les résines de maléinimide/bismaléinimide et les résines de maléinamide/bismaléinamide.

7. Procédé de fabrication d'une garniture de friction pour la transmission d'un couple, comprenant les étapes suivantes :
- il est prévu un substrat (10) qui est poreux,
- un mélange (12) d'un liant (22) et de matières de charge (18, 20) actives par friction est appliqué en une seule étape avec une épaisseur de couche prédéterminée sur le substrat (10), les matières de charge (18, 20) actives par friction appartenant en majeure partie à deux groupes différents de tailles de particule, et les particules de matière de charge (18) du premier groupe présentant une taille de particule dans une plage de 2 à 50 µm, et les particules de matière de charge (20) du deuxième groupe présentant une taille de particule dans une plage de 90 à 800 µm,
- le liant (22) est durci.

8. Procédé selon la revendication 7, **caractérisé en ce que** le mélange (12) est appliqué au moyen d'une racle.

9. Procédé selon la revendication 7, **caractérisé en ce que** le mélange (12) est appliqué au moyen d'une buse (30).

10. Procédé selon l'une des revendications 7 à 9, **caractérisé en ce que** le liant (22) est tout d'abord amené dans un état B après l'application du mélange sur le substrat (10).

11. Procédé selon l'une des revendications 7 à 10, **caractérisé en ce que** le substrat revêtu (12) est collé à un support spécifique à l'application par pressage à chaud, grâce à quoi le liant (22) est entièrement durci.
